# EUROPÄISCHE PATENTSCHRIFT

(11) **EP 2 978 588 B1**
(45) Veröffentlichungstag und Bekanntmachung des Hinweises auf die Patenterteilung: **28.11.2018**
(21) Anmeldenummer: 15724332.0
(22) Anmeldetag: 27.05.2015
(51) Int. Cl.: B29C 65/16, B29K 101/12

(54) **VERFAHREN UND VORRICHTUNG ZUM VERSCHWEISSEN ZWEIER FÜGEPARTNER AUS THERMOPLASTISCHEN KUNSTSTOFFEN ENTLANG EINER SCHWEISSNAHT MITTELS LASER**
METHOD AND DEVICE FOR WELDING TWO THERMOPLASTIC PARTS TO BE JOINED ALONG A WELD SEAM BY MEANS OF A LASER
PROCÉDÉ ET DISPOSITIF DE SOUDAGE PAR LASER DE DEUX ÉLÉMENTS À ASSEMBLER COMPOSÉS DE MATÉRIAUX THERMOPLASTIQUES, LE LONG D'UN JOINT SOUDÉ

(30) Priorität: 03.06.2014 DE 102014210486
(43) Veröffentlichungstag der Anmeldung: 03.02.2016
(73) Patentinhaber: LPKF Laser & Electronics AG, 30827 Garbsen (DE)
(72) Erfinder: KNOLL, Benjamin, 91793 Alesheim (DE); SCHWALME, Michael Jonathan, 90766 Fürth (DE); SIEBEN, Manuel, 90768 Fürth-Vach (DE)
(74) Vertreter: Hübner, Gerd
(86) Internationale Anmeldenummer: PCT/EP2015/061724
(87) Internationale Veröffentlichungsnummer: WO 2015/185415

(56) Entgegenhaltungen:
- DE-A1-102004 056 782
- Mirko Dr. Aden ET AL: "OPTIMIERTE SCAN-STRATEGIEN FÜR HOHE NAHTFESTIGKEITEN BEIM KUNSTSTOFFSCHWEISSEN", , 31. Dezember 2013 (2013-12-31), Seiten 99-99, XP055202741, Gefunden im Internet: URL:http://www.ilt.fraunhofer.de/content/d am/ilt/de/documents/Jahresberichte/JB13/HZ _JB13_99.pdf [gefunden am 2015-07-16]
- Dr Alexander Olowinsky: "EINFLUSS DER TWIST - PARAMETER AUF DIE KUNSTSTOFF-SCHWEISSNAHT", , 1. März 2012 (2012-03-01), Seiten 78-78, XP055202733, Gefunden im Internet: URL:http://www.ilt.fraunhofer.de/content/d am/ilt/de/documents/Jahresberichte/JB11/JB 11_S78.pdf [gefunden am 2015-07-16]
- Gerhard Otto ET AL: "THERMISCHE SIMULATION DER SCHWEISSNAHTHOMOGENITÄT BEIM TWIST -LASERSCHWEISSEN", , 1. März 2013 (2013-03-01), Seiten 81-81, XP055202745, Gefunden im Internet: URL:http://www.ilt.fraunhofer.de/content/d am/ilt/de/documents/Jahresberichte/jb12/JB 12_S81.pdf [gefunden am 2015-07-16]
- "TWIST - neues Verfahren für das Mikro-Schweißen von Kunststoffen", , 31. Dezember 2007 (2007-12-31), Seiten 88-88, XP055202722, Gefunden im Internet: URL:http://www.ilt.fraunhofer.de/content/d am/ilt/de/documents/Jahresberichte/JB07/s8 8.pdf [gefunden am 2015-07-16]
- Andreas Roesner ET AL: "Laserdurchstrahlschweißen von Thermoplasten. Ein Verfahren erobert den Kunststoffmarkt", , 1. September 2008 (2008-09-01), Seiten 28-32, XP055202754, Weinheim Gefunden im Internet: URL:http://onlinelibrary.wiley.com/doi/10. 1002/latj.200890040/pdf [gefunden am 2015-07-16]
- BOGLEA A L ET AL: "Neue Strahlquellen erweitern Anwendungsbereich", KUNSTOFFE, CARL HANSER VERLAG, MUNCHEN, DE, Bd. 97, Nr. 12, 1. Dezember 2007 (2007-12-01), Seiten 133-137, XP001510731, ISSN: 0023-5563
- Dr Alexander Olowinsky: "Vortrag Technologieseminar 2008 Verfahrenstechnik und Anforderungen an die Produktkonstruktion für das Kunststoffschweißen mit Laserstrahlung", ERW, 24. September 2008 (2008-09-24), Seiten 1-56, XP055202747, Gefunden im Internet: URL:http://www.wolf-produktionssysteme.de/ de/veroeffentlicht/technologieseminar/tech nologieseminar2008/vortrag1.pdf [gefunden am 2015-07-16]

## Beschreibung

Die Erfindung betrifft ein Verfahren und eine Vorrichtung zum Verschweißen zweier Fügepartner aus thermoplastischen Kunststoffen entlang einer Schweißnaht mittels Laser mit den im Oberbegriff des Patentanspruches 1 bzw.12 angegebenen Merkmalen.

Diese Fügetechnik ist beispielsweise aus der DE 10 2004 056 782 A1 oder der DE 10 2007 049 362 A1, insbesondere aber aus der Veröffentlichung von Dr. Alexander Olowinsky: "Vortrag Technologieseminar 2008 Verfahrenstechnik und Anforderungen an die Produktkonstruktion für das Kunststoffschweißen mit Laserstrahlung", ERW, 24. September 2008 (2008-09-24), Seiten 1-56, XP055202747, URL: http://ww.wolf-produktionssysteme.de/de/veroeffentlicht/technologiesemiar/technologieseminar2008/ vortrag l.pdf bekannt. Im Wesentlichen werden dabei die zwei geeignet gelagerten und verspannten Fügepartner entlang einer herzustellenden Schweißnaht mit einem Laserstrahl innerhalb eines Arbeitsfeldes bestrahlt, wobei die Strahlrichtung des Laserstrahls durch ein entsprechendes Steuerverfahren mit Steuerdaten entsprechend dem herzustellenden Schweißnaht-Verlauf gesteuert wird. Bekannt dabei ist ferner, die Bestrahlung entlang der Schweißnaht im sogenannten Konturschweißen vorzunehmen, wobei jede Schweißnahtstelle einmal vom Laserstrahl beaufschlagt wird. Alternativ dazu kann auch ein Quasisimultan-Schweißen vorgenommen werden, bei dem der Laserstrahl in kurzen zeitlichen Abständen mehrfach über den Schweißnahtverlauf geführt wird.

Weiterhin ist es aus den genannten Druckschriften bekannt, dass die Fokuszone, also insbesondere der Strahldurchmesser in der Fügeebene kleiner als die Breite der herzustellenden Schweißnaht ist. Um eine Schweißnaht einer entsprechenden Breite herzustellen, schlägt daher die oben genannte DE 10 2004 056 782 A1 vor, den Laserstrahl mit seiner Fokuszone in einer ersten Bewegungskomponente in einer Hauptvorschubrichtung entlang der Bahn der herzustellenden Schweißnaht zu bewegen, sowie in einer damit überlagerten zweiten, oszillierenden Bewegungskomponente zur Abdeckung der Schweißnaht-Breite quer zur Hauptvorschubrichtung mit einer Oszillationsamplitudenweite zu bewegen. Bei einer Überlagerung einer geradlinigen Bewegung entlang der Hauptvorschubrichtung mit einer beispielsweise kreisförmig oszillierenden Bewegungskomponente ergibt sich also ein spiralförmig fortlaufender Weg des Laserfokus, wobei sich die aufeinanderfolgenden Spiralzüge je nach Verhältnis zwischen Oszillationsfrequenz und Vorschubgeschwindigkeit mehr oder weniger stark überlappen. Insgesamt wird durch den Wärmeeintrag in dem vom Laserfokus bestrahlten Bereich in der Fügeebene das thermoplastische Material mindestens eines der beiden Fügepartner aufgeschmolzen und durch Wärmeleitung und Aufschmelzen des zweiten Fügepartners eine Verschweißung zwischen den beiden Fügepartnern erzielt.

Schweißanlagentechnisch wird das vorstehend erörterte Schweißverfahren in der Regel durch einen Galvanometerscanner zur Strahlablenkung realisiert, durch den der Laserstrahl über ein definiertes Arbeitsfeld durch entsprechende Auslenkung geführt werden kann. Dabei wird in der Abbildungsoptik ein sogenanntes F-Theta-Objektiv eingesetzt, das die Eigenschaft hat, den abseits der optischen Achse durch das Objektiv fallenden Strahl so zu fokussieren, dass die Fokuslage in derselben Ebene liegt, wie bei einem Strahl, der direkt auf der optischen Achse läuft. Ein solches F-Theta-Objektiv wird typischerweise aus einer Kombination von zwei bis vier asphärischen Linsen aufgebaut, die in der Form so ausgelegt sind, dass die Fokuslagenanpassung für eine bestimmte Wellenlänge gut funktioniert.

Beim Laserschweißen ist es zur Prozessregelung und -kontrolle nun wünschenswert, in den Strahlengang Messapparaturen, wie z.B. ein Pyrometer einzukoppeln. Aufgrund des F-Theta-Objektivs kommt es jedoch zu einem lateralen Auseinanderlaufen des Schweiß-Spots und der optischen Achse des Pyrometers, wenn der Scanner zunehmend ausgelenkt wird. Insoweit ist die Erfassung des Schweiß-Spots durch das Pyrometer nicht mehr gewährleistet.

Wird nun das F-Theta-Objektiv weggelassen, stellt sich das Problem, dass bei zunehmender Auslenkung aus der optischen Achse der Laseranlage, also mit zunehmendem Auftreffwinkel des Laserstrahls auf die Fügeebene, der Laserstrahl mit seinem Fokus außerhalb der Fügeebene liegt und damit defokussiert wird, der Schweiß-Spot also größer wird.

Ferner ist eine Defokussierung des Laserstrahls dann zu verzeichnen, wenn sich die Fügeebene relativ zur Fokuslage verschiebt, wenn also beispielsweise die beiden Fügepartner entlang der Schweißnaht einen zumindest leicht stufigen Verlauf nehmen.

Die vorstehend erörterten Defokussier-Phänomene sind zwar hinsichtlich des Energieeintrages in die Fügeebene an sich tolerierbar, jedoch wird bei einer gegebenen Oszillationsamplitudenweite durch die Schweiß-Spot-Aufweitung mit zunehmender Auslenkung aus der optischen Achse die quer zur Hauptvorschubrichtung bestrahlte Fläche größer, wodurch die Schweißnaht sich ebenfalls verbreitert.

Aus der Veröffentlichung von Dr. Mirko Aden ET AL: "OPTIMIERTE SCAN-STRATEGIEN FÜR HOHE NAHTFESTIGKEITEN BEIM KUNSTSTOFFSCHWEISSEN", 31. Dezember 2013 (2013-12-31), Seiten 99-99, XP055202741, URL:http://www.ilt.fraunhofer.de/content/dam/ilt/ de/documents/ Jahresberichte/JB13/HZ13_99.pdf, ist es bekannt, dass zur Optimierung der Scanstrategien beim sogenannten TWIST®-Schweißen mit einem Faserlaser bei einer Wellenlänge von 1060 nm unterschiedliche Scanstrategien mit variablen Strahlbewegungen evaluiert werden. Verglichen werden kreisförmige und elliptische periodische Scanbewegungen. Die Festigkeit wird mit Zugversuchen an Doppel-T-Proben als Funktion der Laserleistung bestimmt. Die Geometrie der Schweißnaht wird dabei mit Mikrotomschnitten untersucht.

Bei der Veröffentlichung Dr Alexander Olowinsky: "EINFLUSS DER TWIST PARAMETER AUF DIE KUNSTSTOFF-SCHWEISSNAHT", 1. März 2012 (2012-03-01), Seiten 78-78, XP055202733, URL: http://www.ilt.fraunhofer.de/content/dam/ilt/de/documents/ Jahresberichte/JB11/JB11_S78.pdf, wird auf Basis der allgemeinen Wärmeleitungsgleichung die Temperaturverteilung in den Fügepartnern bei Variationen wichtiger Prozessparameter des TWIST®-Prozesses berechnet. Die hier variierten Parameter sind die Ellipsenradien des periodischen Anteils der TWIST®-Bewegung. Parallel zu den Simulationen wurden Realversuche zur Bestimmung der Festigkeit an Polypropylen durchgeführt.

Die Veröffentlichung Gerhard Otto ET AL: "THERMISCHE SIMULATION DER SCHWEISSNAHT-HOMOGENITÄT BEIM TWIST-LASERSCHWEISSEN", 1. März 2013 (2013-03-01), Seiten 81-81, XP055202745,URL:http://www.ilt.fraunhofer.de/content/dam/ilt/de/ documents/Jahresberichte/ jb12/JB12_S81.pdf, offenbart, auf Basis einer Berechnung der optischen Strahlungspropagation durch den transparenten Fügepartner und der werkstoffabhängigen Absorption im zweiten Fügepartner eine Energiequelle zu simulieren, die als Eingangsgröße für eine FEM-Wärmeleitungsberechnung im Volumen der Fügepartneranordnung dient. Dabei wird sowohl die Lichtstreuung durch den oberen teilkristallinen Fügepartner als auch die Eindringtiefe in den unteren Fügepartner berücksichtigt.

Das Dokument "TWIST - neues Verfahren für das Mikro-Schweißen von Kunststoffen", 31. Dezemeber 2007 (2007-12-31), Seiten 88-88, XP055202722, URL:http://www.ilt.fraunhofer.de/content/ dam/ilt/de/ documents/Jahresberichte/JB07/s88.pdf, charakterisiert das TWIST®-Schweißverfahren, das die inkrementelle Vorgehensweise des Konturschweißens mit der hohen Dynamik und den damit einhergehenden Effekten des Quasisimultanschweißens verbindet. Solch komplexe, genaue und schnelle Bewegungen des Laserstrahls können mit den Komponenten der Hochgeschwindigkeitsscantechnologie, wie Galvanometer, Polygonscanner oder Resonanzscanner realisiert werden. Die unterschiedlichen Bewegungselemente, wie Kreise, sinusförmige Bewegungen oder Bernoulli's Lemniskaten können zu komplex geformten Nahtgeometrien kombiniert werden.

Der Fachaufsatz von Andreas Roesner ET AL: "Laserdurchstrahlschweißen von Thermoplasten. Ein Verfahren erobert den Kunststoffmarkt", 1. September 2008 (2008-09-01), Seiten 28-32, XP055202754, Weinheim, URL:http://onlinelibrary.wiley.com/doi/10.1002/ latj.200890040/pdf, gibt einen Überblick über den Stand des Laserdurchstrahlschweißens im Jahre 2008.

Das Dokument BOGLEA A L ET AL: "Neue Stahlquellen erweitern Anwendungsbereich", KUNSTSTOFFE, CARL HANSER VERLAG, MUNCHEN, DE, Bd. 97, Nr. 12, 1. Dezember 2007 (2007-12-01), Seiten 133-137, XP001510731, ISSN: 0023-5563, beleuchtet die Frage der Strahlquellen näher, wie sie insbesondere für das TWIST®-Schweißen geeignet sind.

Aufgabe der Erfindung ist die Bereitstellung eines Verfahrens und einer entsprechenden Vorrichtung zum Verschweißen zweier Fügepartner, bei der ohne Einsatz eines F-Theta-Objektivs eine definierte Schweißnahtbreite ungeachtet vom Auslenkwinkel des Laserstrahls auf die Fügeebene und/oder der relativen Position von Fokuslage zur Fügeebene gewährleistet ist.

Diese Aufgabe wird durch das im Kennzeichnungsteil des Anspruches 1 angegebene Steuerverfahren gelöst, wonach die Oszillationsamplitudenweite in inverser Abhängigkeit von der Strahldimension, insbesondere vom Strahldurchmesser, in der Fügeebene derart eingestellt wird, dass die Breite des vom Laserstrahl überstrichenen Strahlfeldes unabhängig von der Strahldimension in Querrichtung bezogen auf die Hauptvorschubrichtung der Schweißnahtbreite entspricht.

Mit anderen Worten wird also bei einem Aufweiten der Strahldimension in der Fügeebene, also beispielsweise bei einem größeren Strahldurchmesser bei stärker ausgelenktem Laserstrahl, die Oszillationsamplitudenweite reduziert, so dass die maximale Breite des vom Laserstrahl überstrichenen Korridors, in dem die Schweißnaht erzeugt wird, der Soll-Schweißnahtbreite entspricht.

In vorrichtungstechnischer Hinsicht wird eine an sich bekannte Schweißvorrichtung gemäß Anspruch 12 in ihrer Scannereinrichtung durch ein solches Steuerverfahren gesteuert.

Das erfindungsgemäße Schweißsystem zeichnet sich durch eine flexible Einsatzmöglichkeit für eine Vielzahl unterschiedlicher Anforderungsprofile beim Kunststoffschweißen aus. Im Vergleich zu bekannten Systemen kann insbesondere durch den Einsatz eines Lasers hoher Strahlqualität ein vergrößertes Arbeitsfeld bei gleichzeitig kleinem Schweiß-Spot realisiert werden. Auch kann über die Steuerung der Oszillationsamplitudenweite nicht nur eine Kompensation der Defokussierung im Speziellen, sondern auch eine flexible Einstellbarkeit der Schweißnahtbreite im Allgemeinen problemlos realisiert werden. Schließlich kann eine intelligente Prozessregelung beispielsweise mittels eines Pyrometers in ein entsprechendes Schweißsystem problemlos integriert werden, da die geschilderten Restriktionen durch das im Stand der Technik verwendete F-Theta-Objektiv nicht gegeben sind.

In abhängigen Ansprüchen sind bevorzugte Weiterbildungen des erfindungsgemäßen Verfahrens angegeben. So ist es von Vorteil, dass die zweite oszillierende Bewegungskomponente des Laserstrahls durch eine der ersten, linearen Bewegungskomponente überlagerte kreisartige Bewegung erzeugt wird. Diese oszillierende Bewegungskomponente kann im Wesentlichen durch eine echte Kreisbewegung, elliptische Umlaufbewegungen oder auch geschlossene Schwungkurven, wie etwa die Form einer stehenden oder liegenden Acht erzeugt werden. In jedem Falle ist die Oszillationsamplitudenweite entsprechend dem in der Fügeebene vorliegenden Strahldurchmesser so angepasst, dass eine konstante Soll-Schweißnahtbreite erzeugt wird.

Da die Strahlrichtung des Laserstrahls bezogen auf ein bestimmtes Schweißsystem in einem bekannten Zusammenhang mit der Fokusdimension in der Fügeebene steht, kann aus den Steuerdaten für die Strahlrichtung des Laserstrahls in steuerungstechnisch einfacher Weise die entsprechende Oszillationsamplitudenweite in Abhängigkeit der Strahlrichtung des Laserstrahls eingestellt werden. Dabei kann der Auslenkwinkel des Laserstrahls als die die Strahlrichtung bestimmende Größe zur Bestimmung der Oszillationsamplitudenweite zugrundegelegt werden.

Zusätzlich oder alternativ zu der vorstehenden Bestimmung der Oszillationsamplitudenweite kann mit Hilfe des erfindungsgemäßen Verfahrens auch eine begrenzte Dreidimensionalität der Fügepartner ausgeglichen werden, um beispielsweise auch bei einem stufigen Verlauf der Fügeebene die Oszillationsamplitudenweite entsprechend an die durch die Stufe hervorgerufene Veränderung des Strahldurchmessers in der Fügeebene anzupassen. Zur Bestimmung der Oszillationsamplitudenweite können dann die Formdaten der beiden Fügepartner zugrundegelegt werden, die in der Steuerung des Schweißsystems abgelegt sind.

Gemäß einer weiteren bevorzugten Ausführungsform des erfindungsgemäßen Verfahrens wird die Fokuslage in einem zentralen Bereich des Arbeitsfeldes unterhalb der dortigen Fügeebene zwischen den beiden Fügepartnern bzw. in einem Randbereich des Arbeitsfeldes oberhalb der dortigen Fügeebene zwischen den beiden Fügepartnern eingestellt. Damit wird eine in beiden Richtungen möglichst geringe Variation der Strahldimension über das gesamte Arbeitsfeld erreicht.

Bevorzugte Oszillationsfrequenzen der zweiten Bewegungskomponenten liegen im Kilohertz-Bereich, vorzugsweise zwischen 0,25 kHz und 12 kHz, besonders bevorzugt zwischen 3 kHz und 6 kHz.

Im Hinblick auf die Verzichtbarkeit auf ein F-Theta-Objektiv im Zusammenhang mit dem erfindungsgemäßen Ausgleich der Oszillationsamplitudenweite kann in praktischer Hinsicht das Arbeitsfeld eine Fläche zwischen etwa 500 x 500 mm² und 1200 x 1200 mm², vorzugsweise etwa 650 x 650 mm² aufweisen.

Die Auslegung der Laseroptik ist vorzugsweise derart, dass der Fokus des Laserstrahls einen minimalen Spotdurchmesser von 0,3 mm bis 0,7 mm, vorzugsweise von 0,4 mm aufweist. Diese Dimensionierung erlaubt ein ausreichend großes Prozessfenster für die Erstellung einer Schweißnaht mit einer Schweißnahtbreite im Millimeter-Bereich mit Hilfe der überlagerten Vorschub- und Oszillationsbewegung.

In vorteilhafter Weise wird für die Strahlerzeugung ein Strahl mit hoher Strahlqualität im Bereich von M² = 1,0 - 1,4 eingesetzt. Damit ist die Voraussetzung dafür geschaffen, dass eine vergleichsweise hohe Strahldichte im Bereich der Fügeebene erzielt werden kann.

Gemäß einer weiteren bevorzugten Weiterbildung des erfindungsgemäßen Verfahrens liegt der Strahldurchmesser des Laserstrahls aufgrund der Anordnung der Kollimier- und Fokussieroptik in Strahlrichtung vor der Scanner-Einrichtung dort in einem Bereich zwischen 3 mm und 10 mm, so dass die in der Regel benutzten Scanner-Spiegel mit einer begrenzten Energiedichte im Bereich des reflektierten Strahldurchmessers beaufschlagt werden.

Die Erfindung betrifft ferner eine Vorrichtung zum Schweißen zweier Fügepartner aus thermoplastischen Kunststoffen entlang einer Schweißnaht vorzugsweise im Laserdurchstrahlverfahren mit
- einer Laserquelle,
- einer Aufspanneinrichtung für die Fügepartner,
- einer optischen Laserstrahl-Aufbereitung, insbesondere bestehend aus einer Kollimations- und Fokussierlinsenoptik, und
- einer Scanner-Einrichtung zur Führung des Laserstrahls über das Arbeitsfeld entlang einer zu erstellenden Schweißnaht zwischen den beiden Fügepartnern.

Die erfindungsgemäße Vorrichtung ist dadurch charakterisiert, dass die Scanner-Einrichtung durch ein erfindungsgemäßes Steuerverfahren so steuerbar ist, dass die Oszillationsamplitudenweite in inverser Abhängigkeit von der Strahldimension in der Fügeebene derart eingestellt wird, dass die Breite des vom Laserstrahl überstrichenen Strahlfeldes in Querrichtung bezogen auf die Hauptvorschubrichtung der Soll-Breite der Schweißnaht entspricht.

Zu den Vorteilen dieser erfindungsgemäßen Vorrichtung kann auf die entsprechenden Ausführungen im Zusammenhang mit dem entsprechenden Steuerverfahren verwiesen werden.

Gemäß einer bevorzugten Ausführungsform wird dabei ein Faserlaser für die Schweißvorrichtung eingesetzt. Bevorzugt wird eine Strahlkopplung mittels Singlemode-Faser vorgenommen. Durch diesen Laser guter Strahlqualität in Kombination mit der Scanner-Einrichtung ist es möglich, ein großes Arbeitsfeld bei gleichzeitig verhältnismäßig kleinen Strahldurchmessern zu erzielen. Ferner wird dabei auch eine verhältnismäßig große Rayleigh-Länge des Strahlfokus erreicht.

Grundsätzlich ist es möglich, als Scanner-Einrichtung eine oszillierende Spiegeleinrichtung zu verwenden, die sowohl für die Vorschubbewegung des Laserstrahls entlang der Schweißnahtrichtung also auch für die Oszillationsbewegung quer dazu sorgt. Dies stellt eine apparatetechnisch rationelle Variante dar.

Alternativ dazu kann jedoch auch eine erste Scanner-Einheit für die Erzeugung der ersten Bewegungskomponente des Laserstrahls entlang der Hauptvorschubrichtung und eine zweite, der ersten Scanner-Einrichtung vorgeschaltete Scanner-Einheit zur Erzeugung der zweiten Bewegungskomponente quer zur Hauptvorschubrichtung vorgesehen sein. Durch die Entkopplung der für die Strahlablenkung verantwortlichen Komponenten können diese optimal an die jeweils geforderte Dynamik angepasst werden. So ist die Oszillation der zweiten Bewegungskomponente im Kilohertz-Bereich deutlich dynamischer, aber mit einer weitaus geringeren Amplitude versehen, wie die Bewegung in Hauptvorschubrichtung. Letztere erfolgt z.B. mit einer Vorschubgeschwindigkeit in der Größenordnung von einigen hundert bis einigen wenigen tausend Millimeter pro Sekunde.

Für die Scanner-Einheit zur Oszillationserzeugung der zweiten Bewegungskomponente kann ein Resonanzscanner oder ein akustooptischer Deflektor vorgesehen sein.

Schließlich werden in einer weiteren bevorzugten Ausführungsform in den Scanner-Einheiten Spiegel aus Quarzglas eingesetzt. Dies weicht von den gebräuchlichen Spiegeln aus Siliciumcarbid ab, obwohl letztere leichter und damit einfacher in eine hochfrequente Scann-Bewegung zu versetzen sind. Problematisch ist jedoch die Absorptionsfähigkeit des Siliciumcarbid-Materials für durch die Spiegelschicht durchtretende Reststrahlung des Lasers, was zu einer Aufheizung des Siliciumcarbid-Substrates führt. Dadurch besteht das Risiko, dass die Klebestelle des Substrates zum Scannerantrieb versagt. Quarzglas ist demgegenüber für die im vorliegenden Falle verwendete IR-Strahlung nicht absorptiv. Durch die Spiegelschicht durchgehende Reststrahlung wird im Scanner-Gehäuse oder einer entsprechenden Strahlfalle absorbiert. Damit ist es möglich, im erfindungsgemäßen Schweißsystem einen Laser mit einer deutlich höheren Strahldichte zu benutzen.

Weitere Merkmale, Einzelheiten und Vorteile der Erfindung ergeben sich aus der nachfolgenden Beschreibung eines Ausführungsbeispiels der Erfindung anhand der beigefügten Zeichnungen. Es zeigen:
- Fig. 1: eine schematische Darstellung einer Laser-Schweißvorrichtung,
- Fig. 2: eine stark vergrößerte, schematisierte Draufsicht auf das Arbeitsfeld der Laser-Schweißanlage in der Fügeebene,
- Fig. 3A und B: einen Detailausschnitt aus Fig. 2 zur Darstellung der vom Strahldurchmesser abhängigen Oszillationsamplitudenweite, und
- Fig. 4A und B: schematische, stark vergrößerte Detailschnitte durch zwei Fügepartner vertikal zur Fügeebene im Bereich eines Sprungs der Fügeebene.

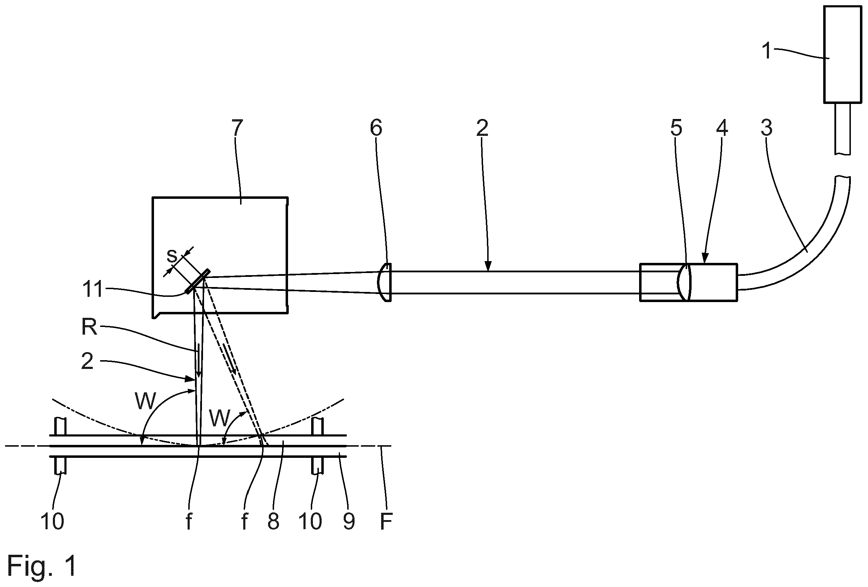

Wie aus Fig. 1 deutlich wird, weist eine erfindungsgemäß gesteuerte Laserschweiß-Vorrichtung als Strahlquelle einen Faserlaser 1 auf, dessen Laserstrahl 2 über eine Singlemode-Faser 3 in das System eingekoppelt wird. Der Laserstrahl 2 wird dabei von der Faser 3 in die Kollimationseinrichtung 4 eingespeist, die eine Kollimierlinse 5 aufweist.

Der so kollimierte Laserstrahl 2 wird mit Hilfe einer Fokussierlinse 6 mit einer definierten Brennweite fokussiert.

Der fokussierte Laserstrahl 2 wird mit Hilfe der Scanner-Einrichtung 7 entsprechend einem noch zu erörterten Steuerverfahren auf die beiden Fügepartner 8, 9 gerichtet und dort zum Einen in der Fügeebene F entlang einer Hauptvorschubrichtung H zur Bildung einer Schweißnaht S in einer ersten Bewegungskomponente geführt. Die beiden Fügepartner 8, 9 sind dabei mit Hilfe einer Aufspanneinrichtung 10 in ausreichendem Kontakt zueinander gehalten, so dass das bekannte Laserdurchstrahlschweißen zur Erzeugung der Schweißnaht S angewendet werden kann. Dabei ist der obere Fügepartner 8 für den Laserstrahl 2 transmissiv, während der untere Fügepartner 9 absorbierend ist. Die eingestrahlte Energie des Laserstrahls 2 führt zu einem Aufschmelzen des unteren Fügepartners 9, durch Wärmeleitung wird der obere Fügepartner 8 ebenfalls aufgeschmolzen und es bildet sich eine stoffschlüssige Verbindung zwischen beiden Fügepartnern 8, 9 entlang des Weges des Laserstrahls 2.

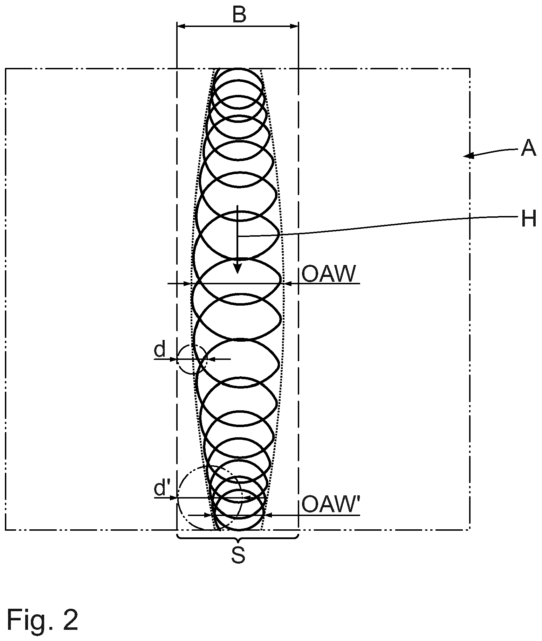

Da der Strahldurchmesser d deutlich geringer als die Soll-Breite B der anzulegenden Schweißnaht ist, wird zum Anderen zur Abdeckung der Soll-Breite B der Laserstrahl 2 quer zur Hauptvorschubrichtung H mit einer zweiten, oszillierenden Bewegungskomponente beaufschlagt, bei der es sich z.B. eine hochfrequente Kreisbewegung etwa zwischen 3 und 6 kHz handelt. Durch eine Überlagerung mit der Bewegung in Hauptvorschubrichtung H entsteht also eine in Fig. 2 gut erkennbare Spiralbewegung des Laserstrahls 2. Je nach Verhältnis der Geschwindigkeit in Hauptvorschubrichtung H und der Oszillationsfrequenz der oszillierenden Bewegungskomponente quer dazu überlappen sich aufeinanderfolgende Spiralgänge mehr oder weniger.

Unter bestimmten Randbedingungen können im Übrigen auch beide Fügepartner 8, 9 im Wesentlichen transmissiv für den Laserstrahl 2 sein. Eine gewisse Restabsorptionsfähigkeit reicht aus, um bei hoher Fokussierung des Laserstrahls 2 trotzdem eine ausreichende Energieabsorption und ein Aufschmelzen der beiden Fügepartner 8, 9 zu erzielen. In der EP 1 098 751 B1 ist ein entsprechendes Verfahren beschrieben, nach dem sich zwei hochtransparente Werkstoffe aufgrund intrinsischer Absorption im Wellenlängenbereich 1,8 - 2,2 µm bearbeiten lassen.

In der Scanner-Einrichtung 7 ist in Fig. 1 schematisiert nur ein Scanner-Spiegel 11 gezeigt. In der Regel sind zur Abdeckung eines zweidimensionalen Arbeitsfeldes A (Fig. 2) zwei Spiegel eingesetzt, von denen jeder für die Ablenkung des Laserstrahls 2 entlang einer Achse x bzw. y sorgt. Der Strahldurchmesser s des Laserstrahls 2 auf dem Spiegel 11 liegt dabei in der Größenordnung zwischen 3 mm und 10 mm.

Die eingangs geschilderte, der Erfindung zugrundeliegende Problematik kann anhand der Fig. 1 nochmals verdeutlicht werden. So ist der senkrecht auf die Fügepartner 8, 9 auftreffende Laserstrahl 2 zentral im Arbeitsfeld A der Schweißeinrichtung angeordnet und weist eine vergleichsweise geringe Dimension, also einen kleinen Strahldurchmesser d auf.

Bei einer Auslenkung des Laserstrahls 2 aus dem zentralen Bereich nach außen hin, so dass die Strahlrichtung R einen gegenüber 90 ° kleineren Auftreffwinkel W mit der Fügeebene F einnimmt, verlängert sich der optische Weg vom Scanner-Spiegel zur Fügeebene F und - da keine F-Theta-Optik zum Ausgleich verwendet wird - es ist der Fokus f des Laserstrahls 2 gegenüber der Fügeebene F nach oben verschoben. Dadurch ist der Strahldurchmesser d im Bereich der Fügeebene F zwischen den beiden Fügepartnern 8, 9 vergrößert und die Form zumindest leicht elliptisch.

In der vergrößerten Fig. 2 ist die Änderung des Strahldurchmessers d in der Fügeebene mit zunehmender Auslenkung des Laserstrahls 2 aus dem zentralen Bereich schematisch angedeutet. Im zentralen Bereich des Arbeitsfeldes A ist der Strahldurchmesser d klein, während im Randbereich des Arbeitsfeldes der Strahldurchmesser d' groß ist. Um nun zu gewährleisten, dass der vergrößerte Strahldurchmesser d' nicht zu einer breiteren Schweißnaht S führt, wird die punktiert in Fig. 2 eingetragene Oszillationsamplitudenweite OAW entsprechend dem Strahldurchmesser d, also entsprechend der Auslenkung und dem sich daraus ergebenen Auftreffwinkel W des Laserstrahls 2 so angepasst, dass vom Laserstrahl 2 unabhängig von der Position im Arbeitsfeld A und der Auslenkung immer ein Strahlfeld quer zur Hauptvorschubrichtung H überdeckt wird, dass der Soll-Breite B der Schweißnaht S entspricht. Im Zentralbereich ist die Oszillationsamplitudenweite OAW also wegen des kleinen Strahldurchmesser d groß, im Randbereich ist es umgekehrt. Eine kleine Oszillationsamplitudenweite OAW' gleicht einen großen Strahldurchmesser d' aus.

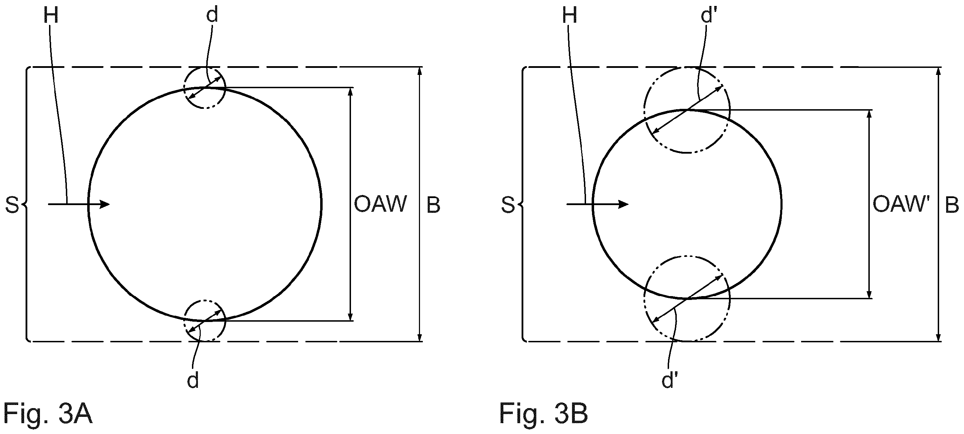

Zur Verdeutlichung ist in Fig. 3A und B dieser Zusammenhang nochmals aufgelöst mit einer reinen Kreisbewegung des Laserstrahls 2 dargestellt. Fig. 3A stellt eine Situation im Zentralbereich des Arbeitsfeldes A dar. Der Strahldurchmesser d ist klein, wodurch die Oszillationsamplitudenweite OAW groß ist, um das Strahlfeld entsprechend der Soll-Breite B der Schweißnaht S einzustellen.

In Fig. 3B ist eine Situation mit ausgelenktem Laserstrahl 2 dargestellt, wodurch der Strahldurchmesser d' gegenüber der Situation in Fig. 3A größer ist. Dementsprechend wird die Oszillationsamplitudenweite OAW' geringer eingestellt, so dass die Soll-Breite B der damit herzustellenden Schweißnaht S unverändert bleibt.

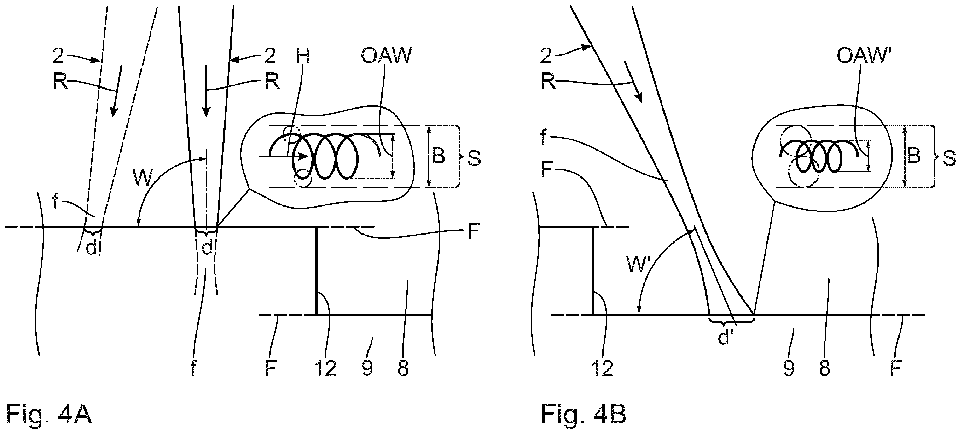

In den Fig. 4A und B ist eine Situation dargestellt, die das Überfahren einer Stufe 12 in der Oberflächentopographie der beiden Fügepartner 8, 9 wiedergibt. In Fig. 4A ist der Laserstrahl 2 vergleichsweise gering ausgelenkt, so dass der Auftreffwinkel W bei etwa 90° liegt. Grundsätzlich ist in diesem Zusammenhang anzumerken, dass das Schweißsystem so ausgelegt ist, dass bei nicht-ausgelenktem Laserstrahl, also einem Auftreffwinkel W von 90 °, der Fokus f etwas unterhalb der Fügeebene F zwischen den beiden Fügepartnern liegt. Bei zunehmender Auslenkung des Laserstrahls 2, wie dies gestrichelt links in Fig. 4A angedeutet ist, wandert der Fokus f in die Fügeebene F und dann darüber hinweg nach oben. Durch diese Auslegung wird erreicht, dass die Variation des Strahldurchmessers d über die Breite des Arbeitfeldes A deutlich reduziert gegenüber einer Systemauslegung wird, bei der der Fokus bei nicht-ausgelenktem Laserstrahl 2 in der Fügeebene F liegt.

In Fig. 4B ist nun die Situation nach Überfahren der Stufe 12 dargestellt, wo bis zur Fügeebene F ein zumindest um die Höhe der Stufe 12 längerer optischer Weg für den Laserstrahl 2 zurückzulegen ist. Darüber hinaus ist eine weitere Vergrößerung des optischen Weges durch die stärkere Auslenkung mit dem Auftreffwinkel W' zu verzeichnen, so dass der Laserstrahl mit einem größeren Strahldurchmesser d' die Fügeebene F trifft. Auch hier wird zur Kompensation die Oszillationsamplitudenweite OAW' gegenüber der Situation in Fig. 4A reduziert, wie durch einen Vergleich der beiden in die Fig. 4A und B eingeblendeten Draufsichten visualisiert wird.

Die Stufe 12 kann dabei einerseits softwareseitig über die in der Steuerung abgelegten Formkoordinaten der Fügepartner 8, 9 in die Ansteuerung der Laserstrahl-Bewegung einbezogen werden. Andererseits ist es möglich, die Anpassung der Ansteuerungsparameter auch aufgrund einer durch den Scanner vorgenommenen Abstandsmessung beispielsweise auf der Basis einer konfokalen chromatischen Messung oder einer Lasertriangulation durchzuführen.

## Patentansprüche

1. Verfahren zum Verschweißen zweier Fügepartner (8, 9) aus thermoplastischen Kunststoffen entlang einer Schweißnaht (3) mittels Laser, wobei der Laserstrahl (2)
- innerhalb eines Arbeitsfeldes (A) durch ein Steuerverfahren mit Steuerdaten entsprechend dem herzustellenden SchweißnahtVerlauf in seiner Strahlrichtung (R) gesteuert wird,
- im die Verschweißung bewirkenden Bereich um seinen Fokus (f) eine Strahldimension, insbesondere Strahldurchmesser (d), aufweist, die in der Fügeebene (F) kleiner als die Soll-Breite (B) der herzustellenden Schweißnaht (S) sowie abhängig vom AuftreffWinkel (W) des Laserstrahls (2) auf die Fügeebene (F) und/oder von der Lage des Fokus (f) relativ zur Fügeebene (F) ist, und
- in einer ersten Bewegungskomponente in einer Hauptvorschubrichtung (H) entlang der Bahn der herzustellenden Schweißnaht (S), sowie
- in einer damit überlagerten zweiten oszillierenden Bewegungskomponente zur Abdeckung der Schweißnaht-Breite (B) quer zur Hauptvorschubrichtung (H) mit einer Oszillationsamplitudenweite (OAW) verschoben wird,
**dadurch gekennzeichnet, dass**
- mit dem Steuerverfahren die Oszillationsamplitudenweite (OAW) in inverser Abhängigkeit von der Strahldimension in der Fügeebene (F), vorzugsweise in Abhängigkeit vom Strahldurchmesser (d), derart eingestellt wird, dass die Breite des vom Laserstrahl (2) überstrichenen Strahlfeldes in Querrichtung bezogen auf die Hauptvorschubrichtung (H) der Soll-Breite (B) der Schweißnaht (S) entspricht.

2. Verfahren nach Anspruch 1, **dadurch gekennzeichnet, dass** die zweite oszillierende Bewegungskomponente des Laserstrahls (2) durch eine der ersten, linearen Bewegungskomponente überlagerte Kreisbewegung erzeugt wird.

3. Verfahren nach Anspruch 1 oder 2, **dadurch gekennzeichnet, dass** die der Bestimmung der Oszillationsamplitudenweite (OAW) zu Grunde liegende Strahldimension (d) in der Fügeebene (F) aus den Steuerdaten der Strahlrichtung (R) des Laserstrahls (2) ermittelt wird.

4. Verfahren nach Anspruch 3, **dadurch gekennzeichnet, dass** zur Bestimmung der Oszillationsamplitudenweite (OAW) der Auftreffwinkel (W) des Laserstrahls (2) auf die Fügeebene (F) zu Grunde gelegt wird.

5. Verfahren nach Anspruch 3 oder 4, **dadurch gekennzeichnet, dass** zur Bestimmung der Oszillationsamplitudenweite (OAW) Formdaten der beiden Fügepartner (8, 9) in der Fügeebene (F) zu Grunde gelegt werden.

6. Verfahren nach einem der vorgenannten Ansprüche, **dadurch gekennzeichnet, dass** die Lage des Fokus (f) in einem zentralen Bereich des Arbeitsfeldes (A) unterhalb der dortigen Fügeebene (F) zwischen den beiden Fügepartnern (8, 9) und/oder in einem Randbereich des Arbeitsfeldes (A) oberhalb der dortigen Fügeebene (F) zwischen den beiden Fügepartnern (8, 9) eingestellt wird.

7. Verfahren nach einem der vorgenannten Ansprüche, **dadurch gekennzeichnet, dass** die Oszillationsfrequenz der zweiten Bewegungskomponente im kHz-Bereich, vorzugsweise 0,25 kHz bis 12 kHz, besonders bevorzugt bei 3 - 6 kHz liegt.

8. Verfahren nach einem der vorgenannten Ansprüche, **dadurch gekennzeichnet, dass** das Arbeitsfeld (A) eine Fläche zwischen 500 x 500 mm² und 1200 x 1200 mm², vorzugsweise 650 x 650 mm² aufweist.

9. Verfahren nach einem der vorgenannten Ansprüche, **dadurch gekennzeichnet, dass** der Fokus (f) des Laserstrahls (2) einen minimalen Spotdurchmesser (d) von 0,3 mm bis 0,7 mm, vorzugsweise von 0,4 mm aufweist.

10. Verfahren nach einem der vorgenannten Ansprüche, **dadurch gekennzeichnet, dass** zur Strahlerzeugung eine Laser (1) mit hoher Strahlqualität im Bereich M² = 1,0 - 1,4 eingesetzt wird.

11. Verfahren nach einem der vorgenannten Ansprüche, **dadurch gekennzeichnet, dass** der Strahldurchmesser (s) des Laserstrahls (2) auf einer Scannereinrichtung (7) zur Führung des Laserstrahls (2) über das Arbeitsfeld (A) in einem Bereich zwischen 3 mm und 10 mm liegt.

12. Vorrichtung zum Verschweißen zweier Fügepartner (8, 9) aus thermoplastischen Kunststoffen entlang einer Schweißnaht (S) vorzugsweise im Laserdurchstrahlverfahren, umfassend
- eine Laserquelle (1),
- eine Aufspanneinrichtung (10) für die Fügepartner (8, 9),
- eine optische Laserstrahl-Aufbereitung, insbesondere bestehend aus einer Kollimations- und Fokussierlinse (5, 6), und
- eine Scanner-Einrichtung (7) zur Führung des Laserstrahls (2) über das Arbeitsfeld (A) entlang der zu erstellenden Schweißnaht (S) zwischen den beiden Fügepartnern (8, 9),
**dadurch gekennzeichnet, dass**
- die Scanner-Einrichtung (7) durch ein Steuerverfahren nach einem der Ansprüche 1 bis 11 steuerbar ist.

13. Vorrichtung nach Anspruch 12, **gekennzeichnet durch** den Einsatz eines Faserlasers (1), bevorzugt durch den Einsatz einer Strahlkopplung mittels Singlemode-Faser (3).

14. Vorrichtung nach Anspruch 12 oder 13, **dadurch gekennzeichnet, dass** die optische Laserstrahl-Aufbereitung vorzugsweise mit der Kollimations- und Fokussierlinse (5, 6) vor der Scanner-Einrichtung (7) positioniert ist.

15. Vorrichtung nach einem der Ansprüche 12 bis 14, **dadurch gekennzeichnet, dass**
- als Scanner-Einrichtung (7) eine einzige oszillierende Spiegeleinrichtung (11) vorgesehen ist, die sowohl für die Führung des Laserstrahls (2) entlang der Hauptvorschubrichtung (H) mit der ersten Bewegungskomponente also auch für die Oszillationsbewegung entsprechend der zweiten Bewegungskomponente quer zur Hauptvorschubrichtung (H) sorgt, oder
- eine erste Scanner-Einheit für die Erzeugung der ersten Bewegungskomponente des Laserstrahls (2) entlang der Hauptvorschubrichtung (H) und eine zweite, der ersten Scanner-Einrichtung vorgeschaltete Scanner-Einheit zur Erzeugung der zweiten Bewegungskomponente quer zur Hauptvorschubrichtung (H) vorgesehen sind.

16. Vorrichtung nach Anspruch 15, **gekennzeichnet durch** einen Resonanzscanner oder einen akustooptischen Deflektor als zweite Scanner-Einheit zur Erzeugung der Strahloszillation.

17. Vorrichtung nach einem der Ansprüche 12 bis 16, **dadurch gekennzeichnet, dass** in den Scanner-Einheiten (7) Spiegel (11) aus Quarzglas eingesetzt sind.

## Claims

1. Method for welding two parts to be joined (8, 9) of thermoplastic materials along a weld seam (3) by means of a laser wherein the laser beam (2)
- is controlled in its beam direction (R) within a working area (A) by a control method using control data corresponding to the weld seam profile to be produced,
- has in the region around its focal point (f) that brings about the welding a beam dimension, in particular a beam diameter (d), that in the joining plane (F) is smaller than the target width (B) of the weld seam (S) to be produced and also is dependent on the angle of incidence (W) of the laser beam (2) on the joining plane (F) and/or on the position of the focal point (f) in relation to the joining plane (F), and
- is moved in a first movement component in a main direction of advancement (H) along the path of the weld seam (S) to be produced, and
- is moved in a second, oscillating movement component, overlaid on the first, to cover the weld seam width (B) transversely to the main direction of advancement (H) with an oscillation amplitude width (OAW),
**characterized in that**
the oscillation amplitude width (OAW) is set by the control method in inverse dependence on the beam dimension in the joining plane (F), preferably in dependence on the beam diameter (d), in such a way that the width of the beam area passed over by the laser beam (2) in the transverse direction with respect to the main direction of advancement (H) corresponds to the target width (B) of the weld seam (S) .

2. Method according to Claim 1, **characterized in that** the second, oscillating movement component of the laser beam (2) is generated by a circular movement overlaid on the first, linear movement component.

3. Method according to Claim 1 or 2, **characterized in that** the beam dimension (d) in the joining plane (F) on which the determination of the oscillation amplitude width (OAW) is based is determined from the control data of the beam direction (R) of the laser beam (2).

4. Method according to Claim 3, **characterized in that** the angle of incidence (W) of the laser beam (2) on the joining plane (F) is used as a basis for the determination of the oscillation amplitude width (OAW).

5. Method according to Claim 3 or 4, **characterized in that** shape data of the two parts to be joined (8, 9) in the joining plane (F) are used as a basis for the determination of the oscillation amplitude width (OAW).

6. Method according to one of the preceding claims, **characterized in that** the position of the focal point (f) is set in a central region of the working area (A) below the joining plane (F) between the two parts to be joined (8, 9) there and/or in a peripheral region of the working area (A) above the joining plane (F) between the two parts to be joined (8, 9) there.

7. Method according to one of the preceding claims, **characterized in that** the oscillation frequency of the second movement component lies in the kHz range, preferably 0.25 kHz to 12 kHz, particularly preferably at 3-6 kHz.

8. Method according to one of the preceding claims, **characterized in that** the working area (A) comprises an area between 500 × 500 mm² and 1200 × 1200 mm², preferably 650 × 650 mm².

9. Method according to one of the preceding claims, **characterized in that** the focal point (f) of the laser beam (2) comprises a minimum spot diameter (d) of 0.3 mm to 0.7 mm, preferably of 0.4 mm.

10. Method according to one of the preceding claims, **characterized in that** a laser (1) with high beam quality in the range of M² =1.0-1.4 is used for generating the beam.

11. Method according to one of the preceding claims, **characterized in that** the beam diameter (s) of the laser beam (2) on a scanner device (7) for guiding the laser beam (2) over the working area (A) lies in a range between 3 mm and 10 mm.

12. Device for welding two parts to be joined (8, 9) of thermoplastic materials along a weld seam (S), preferably by the laser transmission method, comprising:
- a laser source (1),
- a clamping device (10) for the parts to be joined (8, 9),
- an optical laser-beam preparation, in particular consisting of a collimating lens (5) and a focusing lens (6), and
- a scanner device (7) for guiding the laser beam (2) over the working area (A) along the weld seam (S) to be created between the two parts to be joined (8, 9),
**characterized in that**
- the scanner device (7) can be controlled by a control method according to one of Claims 1 to 11.

13. Device according to Claim 12, **characterized by** the use of a fibre laser (1), preferably by the use of a beam coupling by means of single-mode fibre (3).

14. Device according to Claim 12 or 13, **characterized in that** the optical laser-beam preparation is positioned preferably with the collimating lens (5) and the focusing lens (6) upstream of the scanner device (7).

15. Device according to one of Claims 12 to 14, **characterized in that,**
- provided as the scanner device (7) is a single oscillating mirror device (11), which ensures both the guiding of the laser beam (2) along the main direction of advancement (H) with the first movement component and also the oscillation movement corresponding to the second movement component transversely to the main direction of advancement (H), or
- a first scanner unit for generating the first movement component of the laser beam (2) along the main direction of advancement (H) and a second scanner unit, connected upstream of the first scanner device, for generating the second movement component transversely to the main direction of advancement (H).

16. Device according to Claim 15, **characterized by** a resonance scanner or an acousto-optical deflector as the second scanner unit for generating the beam oscillation.

17. Device according to one of Claims 12 to 16, **characterized in that** mirrors (11) of quartz glass are used in the scanner units (7).

## Revendications

1. Procédé de soudage par laser de deux éléments à assembler (8, 9) en matériaux thermoplastiques le long d'un joint soudé (3), dans lequel le rayon laser (2) :
- est commandé à l'intérieur d'une zone de travail (A) par un procédé de commande avec des données de commande correspondant au parcours de soudage à créer dans sa direction de rayonnement (R),
- présente, dans la zone où s'exerce le soudage (F), autour de son foyer (f), une dimension de rayon, en particulier un diamètre de rayon (d), qui est plus petit que la largeur de consigne (B) du joint de soudure (S) à créer et indépendant de l'angle d'incidence (W) du rayon laser (2) sur le plan de soudage (F) et/ou de la position du foyer (f) par rapport au plan de soudage (F), et
- est déplacé dans une première composante de mouvement dans la direction principale d'avancée (H) le long du fil du joint de soudure (S) à créer, ainsi que
- est déplacé dans une seconde composante de mouvement oscillante superposée à la première, pour couvrir la largeur du joint de soudure (B) transversalement à la direction principale d'avancée (H) avec une largeur d'amplitude d'oscillation (OAW),
**caractérisé en ce que** :
- avec le procédé de commande, la largeur d'amplitude d'oscillation (OAW), en fonction inverse de la dimension de rayonnement dans la plan de soudage (F), de préférence en fonction du diamètre du rayon (d), est réglée de telle sorte que la largeur de la zone de rayonnement couverte par le rayon laser (2) corresponde à la largeur de consigne (B) du joint de soudure (S) dans la direction transversale par rapport à la direction principale d'avancée (H).

2. Procédé selon la revendication 1, **caractérisé en ce que** la seconde composante de mouvement oscillante du rayon laser (2) est créée par un mouvement circulaire superposé à la première composante de mouvement linéaire.

3. Procédé selon la revendication 1 ou 2, **caractérisé en ce que** la dimension de rayon (d) à l'origine de la largeur d'amplitude d'oscillation (OAW) dans le plan de soudage (F) est déterminée à partir des données de commande de la direction de rayonnement (R) du rayon laser (2).

4. Procédé selon la revendication 3, **caractérisé en ce que** pour déterminer la largeur d'amplitude d'oscillation (OAW), on postule l'angle d'incidence (W) du rayon laser (2) sur le plan de soudage (F).

5. Procédé selon la revendication 3 ou 4, **caractérisé en ce que** pour déterminer la largeur d'amplitude d'oscillation (OAW), on postule des données de forme des deux éléments à assembler (8, 9) dans le plan de soudage (F).

6. Procédé selon l'une des revendications précédentes, **caractérisé en ce que** la position du foyer (f) est réglée dans une zone centrale de la zone de travail (A) en dessous du plan de soudage (F) à cet endroit-là, entre les deux éléments à assembler (8, 9) et/ou dans une zone périphérique de la zone de travail (A) au-dessus du plan de soudage (F) à cet endroit-là, entre les deux éléments à assembler (8, 9).

7. Procédé selon l'une des revendications précédentes, **caractérisé en ce que** la fréquence d'oscillation de la seconde composante de mouvement oscillante se situe dans le domaine kHz, de préférence entre 0,25 kHz et 12 kHz, particulièrement préférentiellement entre 3 et 6 kHz.

8. Procédé selon l'une des revendications précédentes, **caractérisé en ce que** la zone de travail (A) présente une surface entre 500 × 500 mm² et 1200 × 1200 mm², de préférence 650 × 650 mm².

9. Procédé selon l'une des revendications précédentes, **caractérisé en ce que** le foyer (f) du rayon laser (2) présente un diamètre minimal de point (d) de 0,3 mm à 0,7 mm, de préférence de 0,4 mm.

10. Procédé selon l'une des revendications précédentes, **caractérisé en ce que** pour créer un rayonnement, on utilise un laser (1) à haute qualité de rayonnement, dans le domaine M² = 1,0 à 1,4.

11. Procédé selon l'une des revendications précédentes, **caractérisé en ce que** le diamètre de rayon (s) du rayon laser (2) se situe sur un dispositif de balayage (7) destiné à guider le rayon laser (2) au-dessus de la zone de travail (A) dans une zone entre 3 mm et 10 mm.

12. Dispositif de soudage de deux éléments à assembler (8, 9) en matériaux thermoplastiques le long d'un joint soudé (S), de préférence dans un procédé de soudage par laser, comprenant :
- une source laser (1),
- un gabarit (10) pour les éléments à assembler (8, 9),
- une préparation de rayon laser optique, constituée en particulier d'une lentille de collimation et focalisation (5, 6), et
- d'un dispositif de balayage (7) destiné à guider le rayon laser (2) au-dessus de la zone de travail (A) le long du fil du joint de soudure (S) à créer entre les deux éléments à assembler (8, 9),
**caractérisé en ce que** :
- le dispositif de balayage (7) peut être commandé par un procédé de commande selon une des revendications 1 à 11.

13. Dispositif selon la revendication 12, **caractérisé par** l'utilisation d'un laser à fibre optique (1), préférentiellement par l'utilisation d'un couplage de faisceaux au moyen d'une fibre monomode (3).

14. Dispositif selon la revendication 12 ou 13, **caractérisé en ce que** la préparation de rayon laser optique, de préférence avec la lentille de collimation et focalisation (5, 6), est positionnée avant le dispositif de balayage (7).

15. Dispositif selon une des revendications 12 à 14, **caractérisé en ce que** :
- un unique dispositif de miroir oscillant (11) est prévu comme dispositif de balayage (7), qui assure à la fois le guidage du rayon laser (2) le long de la direction principale d'avancée (H) avec la première composante de mouvement et le mouvement d'oscillation correspondant à la seconde composante de mouvement transversalement à la direction principale d'avancée (H), ou
- sont prévues une première unité de balayage, destinée à créer la première composante de mouvement du rayon laser (2) suivant la direction principale d'avancée (H) et une seconde unité de balayage disposée en amont, destinée à créer la seconde composante de mouvement transversalement à la direction principale d'avancée (H).

16. Dispositif selon la revendication 15, **caractérisé par** un scanner à résonance ou par un déflecteur opto-acoustique en tant que seconde unité de balayage destinée à créer l'oscillation de rayonnement.

17. Dispositif selon une des revendications 12 à 16, **caractérisé en ce que** sont utilisés dans les unités de balayage (7) des miroirs (11) en verre de silice.
